# EUROPÄISCHE PATENTSCHRIFT

(11) **EP 1 471 299 B1**
(45) Veröffentlichungstag und Bekanntmachung des Hinweises auf die Patenterteilung: **31.01.2007**
(21) Anmeldenummer: 04003996.8
(22) Anmeldetag: 23.02.2004
(51) Int. Cl.: F16L 59/14, B32B 1/08, B32B 27/40

(54) **Wärmeisoliertes Leitungsrohr**
Thermally insulated pipe
Tuyau isolé thermiquement

(30) Priorität: 08.03.2003 DE 20303698 U
(43) Veröffentlichungstag der Anmeldung: 27.10.2004
(73) Patentinhaber: BRUGG Rohr AG, Holding, 5200 Brugg (CH)
(72) Erfinder: Bolli,Anja, 7078 Lenzerheide (CH); Rudi, Roberto, 5107 Schinznach-Dorf (CH); Schnell, Urs, 5242 Lupfig (CH)

(56) Entgegenhaltungen:
- EP-A- 0 960 723
- EP-A- 1 288 558
- DE-A- 3 207 742

## Beschreibung

Die Erfindung betrifft ein wärmeisoliertes Leitungsrohr nach dem Oberbegriff des Anspruchs 1.

Aus der EP-0 634 602 B1 ist ein wärmeisoliertes Leitungsrohr bekannt, welches aus einem Innenrohr aus Kunststoff, einem im Abstand dazu konzentrisch angeordneten Außenrohr und einer den Ringraum zwischen Innen- und Außenrohr ausfüllenden Isolierschicht aus aufgeschäumtem Kunststoff auf der Basis von Polyurethan besteht. Die Isolierschicht ist von einer Folie umgeben, welche sowohl mit der Isolierschicht als auch mit dem Außenrohr verklebt ist. Alternativ zu dieser Lösung ist ein Metallband vorzugsweise ein Aluminiumband vorgesehen, welches unter anderem die Aufgabe hat, als Permeationssperre für das Treibgas zu wirken, um ein Ausdiffundieren des Treibgases weitestgehend zu unterbinden.

Aus der EP-0 897 788 B1 ist ein Verfahren zur Herstellung eines wärmeisolierten Leitungsrohres bekannt, bei welchem ein oder mehrere Innenrohre von einer zu einem Schlauch geformten Kunststofffolie umhüllt werden, in den Raum zwischen dem Innenrohr und der Kunststofffolie ein aufschäumbarer Kunststoff eingebracht wird und anschließend ein Außenmantel aus thermoplastischem Kunststoff aufgebracht wird. Der aus der Kunststofffolie geformte Schlauch wird in einer Vorrichtung mit einer Vielzahl von paarweise angeordneten Formhälften geführt. Die Innenflächen der Formhälften weisen ein wellenförmiges Profil auf, in welches der Schlauch durch den sich ausbreitenden Schaum hineingeformt wird. Auf das wellenförmige Profil des Schlauches wird der Außenmantel aufgebracht, welcher somit ein wellenförmiges Außenprofil aufweist. Die Kunststofffolie besteht aus einem thermoformbaren Kunststoff z. B. aus Polyethylen.

Der Nachteil bei den beschriebenen Leitungsrohren ist darin zu sehen, daß bei der Verwendung einer Polyethylenfolie eine Permeationssperre gegen die verwendeten Treibgase Kohldioxid, Pentan, Cyclopentan etc. nicht erreicht wird.

Aus der EP 1 288 558 A1 ist ein wärmeisoliertes Leitungsrohr bekannt, welches aus einem Innenrohr, einer das Innenrohr umgebenden Wärmedämmschicht aus einem aufgeschäumten Kunststoff sowie einem Außenmantel aus Kunststoff besteht. Direkt auf der Wärmedämmschicht befindet sich eine bandförmige Lage aus Streckmetall. Auf die Streckmetallage ist eine thermoformbare Kunststofffolie aufgelegt, auf welche ein Strang schraubenlinienförmig aufgewickelt ist. Beim Aufschäumen drückt der sich entwickelnde Schaum durch die Öffnungen im Streckmetall und formt die Kunststofffolie in Form einer schraubenlinienförmigen Wellung nach außen. Bei der nachfolgenden Extrusion des Außenmantels legt sich dieser in die Wellung ein, so daß der Mantel ebenfalls eine schraubenlinienförmige Wellung erfährt. Die Kunststofffolie kann Barriereeigenschaften haben und weist zu diesem Zweck eine Metallbeschichtung auf.

Die EP 0 960 723 A2 offenbart ein wärmeisoliertes Leitungsrohr mit einem Innenrohr aus Metall oder Kunststoff, einer Wärmedämmschicht auf der Basis von Polyurethan- oder Polyisocyanuratschaum sowie einem Kunststoffaußenrohr. Zwischen der Wärmedämmschicht und dem Außenrohr ist eine als Barriere für das Treibmittel für den Schaum dienende Verbundfolie vorgesehen, welche aus einer beidseitig mit Kunststoff beschichteten Metallfolie besteht. Die dem Außenrohr zugekehrte Kunststoffschicht besteht aus schmelzbarem Kunststoff, der durch die beim Aufschäumen des Polyurethans entstehende Wärme erweicht und mit der inneren Oberfläche des Außenrohres verklebt.

Aus der DE 32 07 742 A1 ist ein wasserführendes Kunststoffrohr bekannt, welches mit einer Umfangshüllschicht versehen ist. Die Umfangshüllschicht besteht aus einer Gasdiffusionssperrschicht aus Polyamid, Polyvinylchlorid, Polyvinylalkohol oder einem Laminat solcher Kunststoffe mit außen liegenden Polyethylenschutzschichten.

Die Verwendung einer Metallfolie zieht den Nachteil nach sich, daß eine Thermoformbarkeit nicht möglich ist, so daß ein Kunststoffaußenrohr mit einer gewellten Oberfläche nicht herstellbar ist.

Der vorliegenden Erfindung liegt die Aufgabe zugrunde, ein wärmeisoliertes Leitungsrohr der eingangs erwähnten Art dahingehend zu verbessern, daß ein Ausdiffundieren des Treibgases durch den Kunststoffaußenmantel nahezu vollständig vermieden ist. Dabei soll die Folie thermoformbar sein, so daß das Leitungsrohr nach dem in der EP-0 897 788 beschriebenen Verfahren herstellbar ist.

Diese Aufgabe wird durch das im Kennzeichen des Anspruchs 1 Erfaßte gelöst.

Weitere vorteilhafte Ausführungen der Erfindung sind in den Unteransprüchen erfaßt.

Der wesentliche Vorteil der Erfindung ist darin zu sehen, daß ein Ausdiffundieren der Treibgase weitestgehend unterbunden wird, so daß die Wärmedämmeigenschaften des Rohres über einen sehr langen Zeitraum von über 30 Jahren nahezu unverändert bleiben.

Der neuartige Aufbau des Mantels gestattet es, daß das Leitungsrohr äußerst flexibel ist und über enge Radien von ca. 0,5 m gebogen werden kann, was sich vorteilhaft bei der Verlegung des Leitungsrohres auswirkt. Dadurch, daß die Kunststofffolie sowohl mit der Wärmedämmschicht als auch mit dem Kunststoffaußenmantel fest verklebt ist, ist eine Längswasserdichtigkeit erreicht und ein Einreißen der Kunststofffolie beim Biegen um enge Radien vermieden.

Ein weiterer wesentlicher Vorteil besteht darin, daß größere Änderungen an dem in der EP 0 897 788 beschriebenen Verfahren nicht erforderlich sind.

Die Erfindung beschränkt sich selbstredend nicht auf ein Leitungsrohr gemäß EP 0 634 602 oder EP 0 897 788 sondern ist auch anwendbar auf Leitungsrohre, wie sie aus der EP 0 892 207 bekannt sind.

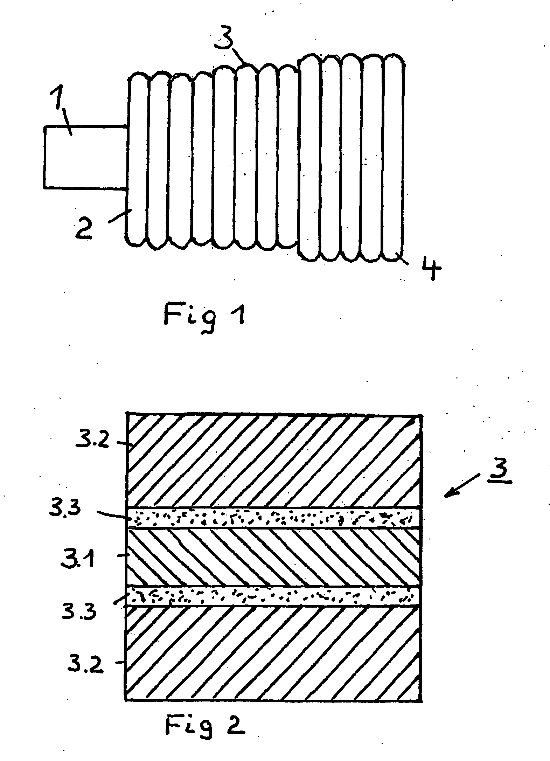

In den Figuren 1 und 2 ist ein Ausführungsbeispiel der Erfindung schematisch dargestellt.

In der Figur 1 ist eine seitliche Ansicht eines wärmeisolierten Leitungsrohres nach der Lehre der Erfindung dargestellt, wobei die einzelnen Aufbauelemente des Leitungsrohres abgesetzt sind.

Mit 1 ist das Innenrohr bezeichnet, welches das Medium, in der Regel ist dies Heizwasser aus einer Fernwärmezentrale, zum Verbraucher transportiert. Das Innenrohr 1 besteht aus einem vernetzten Polyethylen (PE-X), kann aber auch aus einem anderen Kunststoff bestehen oder aus Metall, insbesondere als Wellrohr ausgebildet sein. In dem Leitungsrohr können auch zwei Innenrohre 1 vorgesehen sein, welche parallel und im Abstand zueinander verlaufen. Vor- und Rücklauf liegen dann in einem Leitungsrohr.

Das Innenrohr 1 ist von einer Wärmedämmschicht 2 umgeben, welche aus Polyurethanschaum besteht, der mit Cyclopentan aufgeschäumt wurde. Alternativ kann die Wärmedämmschicht aus Polyisocyanuratschaum bestehen.

Über der Wärmedämmschicht 2 liegt eine Kunststofffolie 3, welche im Wesentlichen als Form für den sich entwickelndem Schaum dient. Darüberhinaus verhindert die Kunststofffolie ein Hinausdiffundieren des Cyclopentans, so daß der Polyurethanschaum über einen extrem langen Zeitraum seine Form und vor allem seine Wärmedämmeigenschaften beibehält.

Über der Kunststofffolie liegt ein extrudierter Kunststoffmantel 4, der vorzugsweise aus Polyethylen besteht.

In der Wärmedämmschicht 2 können noch nicht dargestellte elektrische Leiter vorgesehen sein, welche im Zusammenhang mit einer Überwachungseinrichtung in die Wärmedämmschicht 2 eingedrungene Feuchtigkeit melden und orten sollen.

Darüberhinaus kann in der Wärmedämmschicht ein elektrisches oder optisches Kabel vorgesehen werden, welches zur Datenübertragung verwendet werden kann.

Das wärmeisolierte Leitungsrohr weist eine ringförmige Wellung des Außenmantels 4 auf. Verfahrensbedingt sind auch die Oberflächen der Wärmedämmschicht 2 sowie der Kunststofffolie 3 ringförmig gewellt. Dies rührt daher, daß das Leitungsrohr bevorzugt nach dem in der EP 0 897 788 B1 beschriebenen Verfahren hergestellt wird.

Die Figur 2 zeigt einen Schnitt durch eine Kunststofffolie 3, wie sie bevorzugt verwendet wird.

Die Kunststofffolie 3 weist eine Kernlage 3.1 sowie zwei Randlagen 3.2 auf. Die Kernlage 3.1 ist mit den Randlagen 3.2 durch Haftvermittlerlagen 3.3 verbunden.

Die Kernlage 3.1 besteht aus einem für Cyclopentan undurchlässigen Material, vorzugsweise aus Ethylen(Vinylalkohol-Copolymer (EVOH), Polyvinylalkohol (PVAL) oder Polyethylenterephthalat. Die Randlagen 3.2 haben die Aufgabe, die Kernlage 3.1 bei der Herstellung des Leitungsrohres zu schützen sowie für eine gute Verklebung der Kunststofffolie 3 mit der Wärmedämmschicht 2 sowie dem Kunststoffaußenrohr 4 zu sorgen. Als Material für die Randlagen 3.2 wird Polyethylen oder Polyamid bevorzugt.

Die Kunststofffolie wird im Kaschierverfahren hergestellt, wobei zwischen der Kernlage 3.1 und den Randlagen 3.2 Haftvermittlerschichten 3.3 vorgesehen werden. Als Werkstoff für die Haftvermittlerschichten eignen sich modifizierte Polyolefine, welche Carboxylgruppen enthalten. Bevorzugt enthalten die Haftvermittlerschichten 3.3 ein Ethylen/Vinylacetat-Copolymerisat (EVA).

Eine mit Vorteil anwendbare Kunststofffolie hat folgenden Abmessungen:

| | |
|---|---|
| Kernlage 3.1 | 14 µm |
| Haftvermittlerschicht | 5 µm |
| Randlagen 3.2 | 23 µm. |

Neben der guten Undurchlässigkeit für Cyclopentan weist die Folie den Vorteil auf, daß sie für Wasserdampf bedingt durchlässig ist. Daraus resultiert der Vorteil, daß bei Innenrohren aus Kunststoff z. B. Polyethylen der durch die Wandung der Innenrohre hindurchdiffundierte Wasserdampf durch das Außenrohr in die Umhüllung abgeleitet wird.

## Patentansprüche

1. Wärmeisoliertes Leitungsrohr mit zumindest einem Innenrohr (1), einer direkt auf dem Innenrohr aufliegenden Wärmedämmschicht (2) auf der Basis von aufgeschäumten Polyurethan oder Polyisocyanurat sowie einem Außenmantel (4) aus thermoplastischem Kunststoff, der eine gewellte Oberfläche aufweist, bei welchem Leitungsrohr zwischen der Wärmedämmschicht (2) und dem Außenmantel (4) eine sowohl mit dem Außenmantel (4) als auch mit der Wärmedämmschicht (2) in Berührung stehende thermoformbare Kunststofffolie (3) vorgesehen ist, **dadurch gekennzeichnet, daß** die Kunststofffolie (3) aus mehreren nichtmetallischen Schichten (3.1,3.2,3.3) besteht, daß zumindest eine der Schichten (3.1) für das in den Zellen des aufgeschäumten Polyurethans oder Polyisocyanurats befindliche Treibgas undurchlässig ist, und daß sowohl die dem Außenmantel (4) zugekehrte Schicht (3.2) mit diesem als auch die der Wärmedämmschicht (2) zugekehrte Schicht (3.2) mit dieser verklebt ist.

2. Wärmeisoliertes Leitungsrohr nach Anspruch 1, **dadurch gekennzeichnet, daß** die für das Treibgas undurchlässige Schicht (3.1) aus Ethylen/Vinylalkohol-Copolymer (EVOH) besteht.

3. Wärmeisoliertes Leitungsrohr nach Anspruch 1, **dadurch gekennzeichnet, daß** die für das Treibgas undurchlässige Schicht (3.1) aus Polyvinylalkohol (PVAL) besteht.

4. Wärmeisoliertes Leitungsrohr nach Anspruch 1, **dadurch gekennzeichnet, daß** die für das Treibgas undurchlässige Schicht (3.1) aus Polyethylenterephthalat besteht.

5. Wärmeisoliertes Leitungsrohr nach einem der Ansprüche 1 bis 4, **dadurch gekennzeichnet, daß** die dem Außenmantel (4) und der Wärmedämmschicht (2) zugekehrte Schichten (3.2) aus einem thermoplastischen Kunststoff, vorzugsweise aus Polyethylen (PE), Polyamid (PA) oder Ethylenvinylacetat (EVA) bestehen.

6. Wärmeisoliertes Leitungsrohr nach einem der Ansprüche 1 bis 5, **dadurch gekennzeichnet, daß** die Kunststofffolie (3) eine Verbundfolie ist und die einzelnen Schichten (3.1,3.2) durch jeweils eine Haftvermittlerschicht (3.3) verbunden sind.

7. Wärmeisoliertes Leitungsrohr nach Anspruch 6, **dadurch gekennzeichnet, daß** die Haftvermittlerschicht (3.3) ein modifiziertes Polyolefin mit Carboxylgruppen enthält.

8. Wärmeisoliertes Leitungsrohr nach Anspruch 6, **dadurch gekennzeichnet, daß** die Haftvermittlerschicht (3.3) ein Ethylen/Vinylacetat-Copolymerisat enthält.

9. Wärmeisoliertes Leitungsrohr nach einem der Ansprüche 1 bis 8, **dadurch gekennzeichnet, daß** die Wanddicke der Folie (3) 60 bis 70 µm beträgt.

10. Wärmeisoliertes Leitungsrohr nach einem der Ansprüche 1 bis 9, **dadurch gekennzeichnet, daß** die Wanddicke der für das Treibgas undurchlässigen Schicht (3.1) 10 bis 20 µm vorzugsweise 12 bis 16 µm beträgt.

11. Wärmeisoliertes Leitungsrohr nach einem der Ansprüche 1 bis 10, **dadurch gekennzeichnet, daß** die Wanddicke der außengelegenen Schichten (3.2) aus thermoplastischem Material 15 bis 25 µm beträgt.

## Claims

1. Thermally insulated pipe with at least one inner pipe (1), a thermally insulating layer (2) which lies directly on the inner pipe and is based on foamed polyurethane or polyisocyanurate, and an outer sheath (4) consisting of thermoplastic plastic having a corrugated surface, whereby the pipe has a thermoforming plastic film (3) between the thermally insulating layer (2) and the outer sheath (4), and it contacts both the outer sheath (4) as well as a thermally insulating layer (2), **characterized in that** the plastic film (3) consists of several non-metallic layers (3.1, 3.2, 3.3), at least one of the layers (3.1) is impermeable to the foaming gas in the cells of the foamed polyurethane or polyisocyanurate, and the layer (3.2) facing the outer sheath (4) is adhered to the outer sheath, and the layer (3.2) facing the thermally insulating layer (2) is adhered to the thermally insulating layer.

2. Thermally insulated pipe according to claim 1, **characterized in that** the layer (3.1) impermeable to the foaming gas consists of ethylene/vinyl alcohol copolymer (EVOH).

3. Thermally insulated pipe according to claim 1, **characterized in that** the layer (3.1) impermeable to the foaming gas consists of polyvinyl alcohol (PVAL).

4. Thermally insulated pipe according to claim 1, **characterized in that** the layer (3.1) impermeable to the foaming gas consists of polyethylene terephthalate.

5. Thermally insulated pipe according to one of claims 1 to a 4, **characterized in that** the layers (3.2) facing the outer sheath (4) and the thermally insulating layer (2) consist of a thermoplastic plastic, preferably polyethylene (PE), polyamide (PA), or ethylene vinyl acetate (EVA).

6. Thermally insulated pipe according to one of claims 1 to 5, **characterized in that** the plastic film (3) is a compound film, and the individual layers (3.1, 3.2) are bonded by an adhesive layer (3.3).

7. Thermally insulated pipe according to claim 6, **characterized in that** the adhesive layer (3.3) contains a modified polyolefin with carboxyl groups.

8. Thermally insulated pipe according to claim 6, **characterized in that** the adhesive layer (3.3) contains an ethylene/vinyl acetate copolymer.

9. Thermally insulated pipe according to one of claims 1 to 8, **characterized in that** the wall of the film (3) is 60 to 70 µm thick.

10. Thermally insulated pipe according to one of claims 1 to a 9, **characterized in that** the wall of the layer impermeable to the foaming gas (3.1) is 10 to 20 µm thick, and preferably 12 to 16 µm.

11. Thermally insulated pipe according to one of claims and 1 to 10, **characterized in that** the wall of the outer layers (3.2) consisting of thermoplastic material is 15 to 25 µm thick.

## Revendications

1. Tubulure thermo-isolée comportant au moins un tube intérieur (1), une couche thermo-isolante (2) à base de polyuréthane ou de poly-isocyanurate expansé appliquée directement sur le tube intérieur, ainsi qu'une enveloppe extérieure (4) en matière synthétique thermoplastique présentant une surface ondulée, tubulure pour laquelle, entre la couche thermo-isolante (2) et l'enveloppe extérieure (4) est prévue une feuille (3) en matière synthétique thermoformable en contact aussi bien avec l'enveloppe extérieure (4) qu'avec la couche thermo-isolante (2), **caractérisée en ce que** la feuille (3) en matière synthétique se compose de plusieurs couches non métalliques (3.1, 3.2, 3.3), qu'au moins l'une des couches (3.1) est imperméable au gaz propulseur présent dans le polyuréthane ou poly-isocyanurate expansé, et **en ce qu'**aussi bien la couche (3.2) tournée vers l'enveloppe extérieure (4) est collée contre cette dernière que la couche (3.2) tournée vers la couche thermo-isolante (2) est collée contre cette dernière.

2. Tubulure thermo-isolée selon la revendication 1, **caractérisée en ce que** la couche (3.1) imperméable au gaz propulseur est en copolymère éthylène /alcool vinylique (EVOH).

3. Tubulure thermo-isolée selon la revendication 1, **caractérisée en ce que** la couche (3.1) imperméable au gaz propulseur est en alcool polyvinylique (PVAL)

4. Tubulure thermo-isolée selon la revendication 1, **caractérisée en ce que** la couche (3.1) imperméable au gaz propulseur est en polyéthylène téréphtalate.

5. Tubulure thermo-isolée selon l'une des revendications 1 à 4, **caractérisée en ce que** les couches (3.2) tournées vers l'enveloppe extérieure (4) et vers la couche thermo-isolante (2) sont en une matière synthétique thermoplastique, de préférence en polyéthylène (PE), polyamide (PA) ou en éthylène vinyle acétate (EVA).

6. Tubulure thermo-isolée selon l'une des revendications 1 à 5, **caractérisée en ce que** la feuille en matière synthétique (3) est une feuille en matériau composite et que les différentes couches (3.1, 3.2) sont reliées chacune par une couche d'agent de pontage (3.3).

7. Tubulure thermo-isolée selon la revendication 6, **caractérisée en ce que** la couche d'agent de pontage (3.3) contient une polyoléfine modifiée à groupes carboxyle.

8. Tubulure thermo-isolée selon la revendication 6, **caractérisée en ce que** la couche d'agent de pontage (3.3) contient un copolymérisat d'éthylène / acétate de vinyle.

9. Tubulure thermo-isolée selon l'une des revendications 1 à 8, **caractérisée en ce que** l'épaisseur de paroi de la feuille (3) est comprise entre 60 et 70 microns.

10. Tubulure thermo-isolée selon l'une des revendications 1 à 9, **caractérisée en ce que** l'épaisseur des parois de la couche (3.1) imperméable au gaz propulseur est comprise entre 10 et 20 microns, et de préférence entre 12 et 16 microns.

11. Tubulure thermo-isolée selon l'une des revendications 1 à 10, **caractérisée en ce que** l'épaisseur des parois des couches (3.2) en matériau thermoplastique situées à l'extérieur est comprise entre 15 et 25 microns.
